# EUROPEAN PATENT APPLICATION

(11) **EP 2 732 725 A1**
(43) Date of publication of application: **21.05.2014**
(21) Application number: 12811489.9
(22) Date of filing: 11.07.2012
(51) Int. Cl.: A47B 31/00, A47B 9/04, A61G 12/00, B62B 3/02, B62B 5/00

(54) **CART DEVICE**

(30) Priority: 12.07.2011 JP 2011154288; 12.07.2011 JP 2011154289
(71) Applicant: Okamura Corporation, Kanagawa 220-0004 (JP)
(72) Inventor: ONO, Naho, Yokohama-shi Kanagawa 220-0004 (JP); SAKAKIBARA, Yoshihiro, Yokohama-shi Kanagawa 220-0004 (JP); MOMOI, Masashi, Yokohama-shi Kanagawa 220-0004 (JP); TOMOE, Daisuke, Yokohama-shi Kanagawa 220-0004 (JP)
(74) Representative: Cabinet Laurent & Charras
(86) International application number: PCT/JP2012/067756
(87) International publication number: WO 2013/008868

(57) **Abstract**

The cart device (10) includes a base portion (11) capable of traveling on a floor; a support base body (12) provided on the base portion (11) so as to project upward; and a top board (14) supported by the support base body (12) from below. In addition, the support base body (12) includes a fixed post (18) fixed to the base portion (11) so as to extend upward; a movable post (19) provided in the fixed post (18) so as to be capable of moving in an up-and-down direction relative to the fixed post (18), the movable post (19) supporting the top board (14) from below; and a bumper member (27) provided on an outer lateral surface of the movable post (19) so as to be capable of absorbing impact.

## Description

### Technical Field

The present invention relates to a cart device which is used to move an article in an office, a hospital, a public facility or the like.

Priority is claimed on Japanese Patent Application No. 2011-154288, filed July 12, 2011, and on Japanese Patent Application No. 2011-154289, filed July 12, 2011, the contents of which are incorporated herein by reference.

### Background Art

In an office, a hospital, a public facility or the like, while performing work using an article such as an electronic device, a person may have to move from an office space to another office space. In this case, in order to move an electronic device or the like between these office spaces, a cart device is widely used. The cart device includes a base portion having casters so as to be capable of traveling, a post extending upward from the base portion, and a top board supported by the post so as to allow an electronic device or the like to be placed thereon. In addition, so as to adjust the level of the top board in the up-and-down direction depending on the body size of a worker or working situations, a cart device in which a post supporting a top board is configured to be extendable and retractable is proposed in the related art.

When such a cart device is used, it is necessary to secure an arrangement place thereof. That is, in a case where, for example, workers using respective cart devices come into the same office space and perform work, a plurality of cart devices are arranged around a table installed in the office space. Therefore, the periphery of the table may be crowded, and the work may be disturbed.

Accordingly, in order not to reduce spaces around a table while cart devices are arranged at the periphery of the table, a method of arranging a cart device so that the top board of the cart device overlaps with the top board of the table in plan view is known in the related art (for example, refer to Patent Document 1).

In this method, when the cart device is arranged at the periphery of the table, after the length of the post is adjusted so that the top board of the cart device is positioned above the top board of the table, the cart device is integrated with the table so that the top board of the table enters a lower space of the top board of the cart device. Thus, since the cart device is arranged so that the top board of the cart device overlaps with the top board of the table in plan view, a wide space can be secured at the periphery of the table.

### Document of Related Art

### Patent Document

[Patent Document 1] Japanese Unexamined Patent Application, First Publication No. 2010-104573

### Summary of Invention

### Technical Problem

However, according to a cart device in the related art, in a case where the cart device is arranged so that the top board of the table enters a lower space of the top board of the cart device, the top board of the table may contact the post of the cart device. The contact may cause damage to the post of the cart device or to the top board of the table. Accordingly, strength that can prevent damage to the post of the cart device even if the top board of the table contacts the post is required for the post of the cart device.

The present invention was made in view of the above circumferences, and aims to provide a cart device in which a post supporting a top board is provided to be extendable and retractable and which can prevent damage to the post thereof or to a top board of a table when the cart device is arranged so as to be integrated with the table.

### Solution to Problem

According to a first aspect of the present invention, a cart device includes a base portion capable of traveling on a floor; a support base body provided on the base portion so as to project upward; and a top board supported by the support base body from below. In addition, the support base body includes a fixed post fixed to the base portion so as to extend upward, a movable post provided in the fixed post so as to be capable of moving in an up-and-down direction relative to the fixed post, the movable post supporting the top board from below, and a bumper member provided on an outer lateral surface of the movable post so as to be capable of absorbing impact.

According to this configuration, when the cart device is arranged at the periphery of a table, the relative position of the movable post with respect to the fixed post is adjusted, and thereby the top board of the cart device is positioned above the top board of the table. Thereafter, the cart device is integrated with the table so that the top board of the table enters a lower space of the top board of the cart device. At this time, although the top board of the table contacts the movable post of the cart device, the bumper member provided on the outer lateral surface of the movable post absorbs impact caused by the contact between them. Thus, damage to the movable post or to the top board of the table due to the impact of the contact can be prevented.

In this case, a length of the bumper member in the up-and-down direction may be greater than or equal to a distance in which the movable post can move relative to the fixed post.

According to this configuration, even when the movable post is at any relative position with respect to the fixed post, since the bumper member is arranged so as to face the top board of the table, the top board of the table properly contacts the bumper member. Thus, the bumper member reliably absorbs impact caused by the contact between the movable post and the top board of the table.

In addition, the fixed post may be formed into a tubular shape, and the movable post may be fitted into an inner cavity of the fixed post so as to be slidable in the up-and-down direction.

According to this configuration, by sliding the movable post fitted into the inner cavity of the fixed post in the up-and-down direction, the relative position of the movable post with respect to the fixed post can be easily and reliably adjusted.

In addition, the bumper member may be provided on at least a front side of the outer lateral surface of the movable post.

According to this configuration, it is sufficient if the bumper member is provided on at least the front side of the outer lateral surface of the movable post, and thus the cost can be reduced by decreasing the material cost of the bumper member.

In addition, the bumper member may be formed of an elastic member.

According to this configuration, when the top board of the table contacts the movable post of the cart device, the bumper member is elastically deformed by the impact thereof, and thereby the bumper member can absorb the impact caused by the contact between them.

In addition, a cutout portion having a shape corresponding to the bumper member may be formed in the outer lateral surface of the movable post, and the bumper member may be attached to the cutout portion.

According to this configuration, since the shape of the cutout portion formed in the movable post corresponds to the shape of the bumper member, when the bumper member is attached to the cutout portion, the surface of the bumper member becomes flush with the outer lateral surface of the movable post. Thus, in a case where, for example, the fixed post is formed into a tubular shape and the movable post is capable of being inserted into the inner cavity of the fixed post, the bumper member can be prevented from contacting the inner lateral surface of the fixed post, and the movable post can smoothly slide.

In addition, the cart device may further include a storage member provided in at least one of a front side and a rear side of an outer lateral surface of the fixed post, the storage member being used for storing an article. One of the fixed post and the movable post may be formed as a first post being hollow, the other of the fixed post and the movable post may be formed as a second post capable of being inserted into an inner cavity of the first post. Furthermore, one group of guide rollers and roller guide grooves may be provided on both sides in a left-and-right direction of an inner lateral surface of the first post, the roller guide grooves being used to guide the guide rollers in the up-and-down direction, and the other group of the guide rollers and the roller guide grooves may be provided on both sides in the left-and-right direction of an outer lateral surface of the second post.

According to this configuration, the guide roller and the roller guide groove used to guide the movement of the movable post with respect to the fixed post are provided on each of left and right sides of the support base body. Thus, the thickness in the front-and-rear direction of the support base body can be thinned down. Accordingly, the storage member provided in at least one of the front side and the rear side of the support base body can secure a sufficient storing volume.

In addition, the fixed post may be formed to be hollow, the movable post may be formed so as to be capable of being inserted into an inner cavity of the fixed post, and a second attachment part allowing a first attachment part included in the storage member to be attached thereto may be provided in the fixed post at each of both outer sides in the left-and-right direction of the guide rollers or the roller guide grooves which are disposed inside the fixed post.

According to this configuration, the movable post is inserted into the inner cavity of the fixed post. In addition, the second attachment part to allow the storage member to be attached to the fixed post positioned on the outside is provided on each of both outer sides in the left-and-right direction of the guide rollers or the roller guide grooves. Thus, even when the second attachment parts are provided in the fixed post, the thickness in the front-and-rear direction of the support base body can be thinned down. Accordingly, the storage member provided in at least one of the front side and the rear side of the support base body can secure a sufficient storing volume.

In addition, the first attachment part may be one of an engagement claw and an engagement hole allowing the engagement claw to engage therewith, and the second attachment part may be the other of the engagement claw and the engagement hole.

According to this configuration, by engaging the engagement claw with the engagement hole, the storage member can be easily and reliably attached to the fixed post.

In addition, the first attachment part may be one of a fitting groove and a fitting projection having a cross-sectional shape corresponding to that of the fitting groove, and the second attachment part may be the other of the fitting groove and the fitting projection. Furthermore, the fitting groove has a cross-sectional shape in a horizontal direction in which the groove width thereof is formed so as to gradually widen as it approaches from an opening to a bottom of the fitting groove.

According to this configuration, since the fitting projection fitted into the fitting groove cannot move from the bottom toward the opening of the fitting groove, the fitting projection is not detached from the fitting groove. Thus, the storage member can be reliably attached to the fixed post.

According to a second aspect of the present invention, a cart device includes a base portion capable of traveling on a floor; a fixed post fixed to the base portion so as to extend upward; a movable post provided in the fixed post so as to be capable of moving in an up-and-down direction relative to the fixed post; a top board supported by the movable post from below; a storage member provided in at least one of a front side and a rear side of an outer lateral surface of the fixed post, the storage member being used for storing an article. In addition, one of the fixed post and the movable post is formed as a first post being hollow, and the other of the fixed post and the movable post is formed as a second post capable of being inserted into an inner cavity of the first post. Furthermore, one group of guide rollers and roller guide grooves are provided on both sides in a left-and-right direction of an inner lateral surface of the first post, the roller guide grooves being used to guide the guide rollers in the up-and-down direction, and the other group of the guide rollers and the roller guide grooves are provided on both sides in the left-and-right direction of an outer lateral surface of the second post.

In this case, the fixed post may be formed to be hollow, the movable post may be formed so as to be capable of being inserted into an inner cavity of the fixed post, and a second attachment part allowing a first attachment part included in the storage member to be attached thereto may be provided in the fixed post at each of both outer sides in the left-and-right direction of the guide rollers or the roller guide grooves which are disposed inside the fixed post.

In addition, the first attachment part may be one of an engagement claw and an engagement hole allowing the engagement claw to engage therewith, and the second attachment part may be the other of the engagement claw and the engagement hole.

In addition, the first attachment part may be one of a fitting groove and a fitting projection having a cross-sectional shape corresponding to that of the fitting groove, and the second attachment part may be the other of the fitting groove and the fitting projection. Furthermore, the fitting groove has a cross-sectional shape in a horizontal direction in which a groove width thereof is formed so as to gradually widen as it approaches from an opening to a bottom of the fitting groove.

### Effects of Invention

According to a cart device related to the present invention, when the cart device in which a post supporting a top board is provided to be extendable and retractable is arranged so as to be integrated with a table, it is possible to prevent damage to the post thereof or to the top board of the table.

### Brief Description of Drawings

FIG. 1 is a schematic perspective view showing a cart device related to a first embodiment of the present invention.
FIG. 2 is a schematic cross-sectional view along an A-A line of FIG. 1.
FIG. 3 is a schematic cross-sectional view showing an outer portion related to the first embodiment of the present invention.
FIG. 4 is a schematic perspective view showing an attachment structure of a shelf board to a support base body related to the first embodiment of the present invention.
FIG. 5 is a schematic cross-sectional view showing an inner portion related to the first embodiment of the present invention.
FIG. 6 is a schematic cross-sectional view showing a bumper member related to the first embodiment of the present invention.
FIG. 7 is a schematic perspective view showing an attachment structure of a storage pocket to the support base body related to the first embodiment of the present invention.
FIG. 8 is a view showing a state where the cart device related to the first embodiment of the present invention is in normal use.
FIG. 9 is a view showing a stored state where the cart device related to the first embodiment of the present invention is in non-use.
FIG. 10 is a schematic perspective view showing an attachment structure of a shelf board to a support base body related to a second embodiment of the present invention.

### Description of Embodiments

### (First Embodiment)

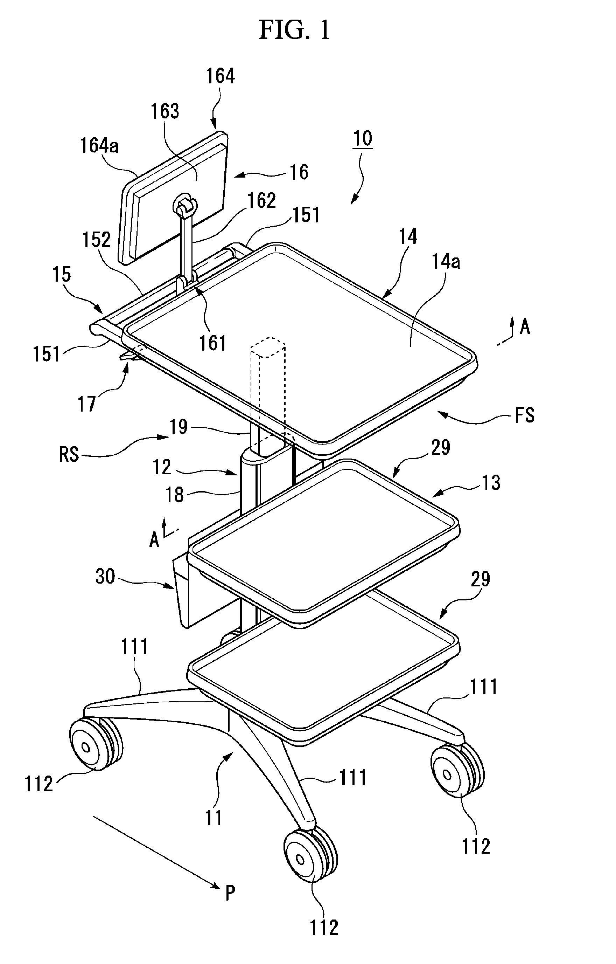

Hereinafter, embodiments of the present invention are described with reference to the drawings. First, the configuration of a cart device related to a first embodiment of the present invention is described. FIG. 1 is a schematic perspective view showing a cart device 10 related to the first embodiment of the present invention.

The cart device 10 includes a base portion 11 composing the lowermost portion of the cart device, a support base body 12 provided on the base portion 11 so as to project upward, storage members 13 provided in an intermediate portion in the up-and-down direction of the support base body 12, a top board 14 provided on the top of the support base body 12 so as to be supported by the support base body 12 from below, an operating handle 15 provided in the top board 14 so as to project in the horizontal direction, an electronic device unit 16 provided in the top board 14 so as to project upward, and an operating lever 17 provided in the top board 14 so as to project slantingly downward.

### (Base Portion)

The base portion 11 is a member to provide the cart device 10 with a traveling function. As shown in FIG. 1, the base portion 11 includes four legs 111 in which the base ends thereof are connected together and the tips thereof extend in four directions different to each other, and four casters 112 attached to the tips of the legs 111. The four casters 112 are supported by the legs 111 so as to be capable of rotating around horizontal axes, and are supported so as to be capable of rotating around vertical axes. Therefore, the base portion 11 and the cart device 10 with the base portion are configured so as to be capable of traveling on a floor in any direction.

In addition, in this embodiment, as shown by an arrow P in FIG. 1, a direction from the operating handle 15 toward the top board 14 is referred to as "front-and-rear direction" of the cart device 10. In FIG. 1, a side in which the top board 14 or the storage members 13 are disposed is referred to as a front side of the cart device 10, and a side in which the operating handle 15 is disposed is referred to as a rear side of the cart device 10. Furthermore, a direction perpendicular to the front-and-rear direction in a horizontal plane is referred to as "left-and-right direction".

### (Support Base Body)

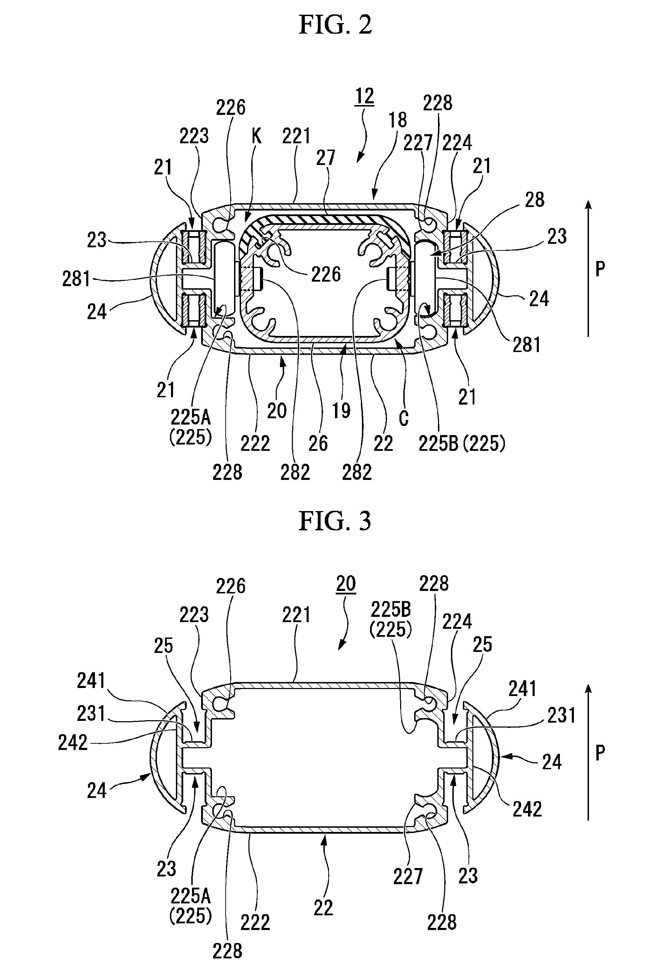

The support base body 12 is a member which connects the base portion 11 and the top board 14. FIG. 2 is a schematic cross-sectional view along an A-A line of FIG. 1. As shown in FIGS. 1 and 2, the support base body 12 includes an outer post 18 (a fixed post, a first post) having an approximately ellipse tubular shape which is hollow, and an inner post 19 (a movable post, a second post) fitted into an inner cavity K of the outer post 18. In addition, the outer post 18 is fixed to the base portion 11 so as to extend upward. The inner post 19 is provided in the outer post 18 so as to be capable of moving in the up-and-down direction relative to the outer post, and supports the top board 14 from below. The inner post 19 is fitted into the inner cavity K of the outer post 18 so as to be slidable in the up-and-down direction.

As shown in FIG. 2, the outer post 18 includes a tubular outer portion 20 integrally formed of aluminum or the like, and four attachment metal fittings 21 (second attachment part) attached to the outer portion 20.

FIG. 3 is a schematic cross-sectional view showing the outer portion 20 in the horizontal direction. The outer portion 20 includes a rectangular portion 22 having an approximately rectangular shape in cross-section, projecting parts 23 projecting from both ends in the longitudinal direction (left-and-right direction) of the rectangular portion 22 to the outsides, and arc portions 24 which have an approximately arc shape in cross-section and are provided at the tips of the projecting parts 23.

As shown in FIG. 3, the rectangular portion 22 includes a front surface part 221, a rear surface part 222, a first side surface part 223, and a second side surface part 224. The front and rear surface parts 221 and 222 extend to be parallel to each other to be opposite to each other. The first and second side surface parts 223 and 224 extend to be approximately perpendicular to the front and rear surface parts 221 and 222 so as to be opposite to each other. In each inner lateral surface of the first and second side surface parts 223 and 224, a roller guide groove 225 into which a guide roller 28 (described below) of the inner post 19 is fitted is formed. The roller guide grooves 225 guide the guide rollers 28 in the up-and-down direction.

In the roller guide grooves 225, a first roller guide groove 225A provided in the first side surface part 223 is formed of a pair ofroller-holding pieces 226 projecting from the first side surface part 223. The pair of roller-holding pieces 226 are separated from each other with a certain distance in the front-and-rear direction. Each of the surfaces facing each other of the roller-holding pieces 226 is formed into a linear shape in cross-section. Although it is not shown in the drawings, the roller-holding pieces 226 are provided so as to extend in the longitudinal direction (up-and-down direction) of the outer post 18.

On the other hand, in the roller guide grooves 225, a second roller guide groove 225B provided in the second side surface part 224 is formed of a pair of roller-fitting pieces 227 projecting from the second side surface part 224. The pair of roller-fitting pieces 227 are separated from each other in the front-and-rear direction with the approximately same distance as the separation distance between the pair of roller-holding pieces 226. Each of the surfaces facing each other of the roller-fitting pieces 227 is formed into an arc shape curved outward in cross-section. Although it is not shown in the drawings, the roller-fitting pieces 227 are provided so as to extend in the longitudinal direction of the outer post 18.

As shown in FIG. 3, a screw hole 228 having an approximately circle shape in cross-section is formed at each of four corners inside the rectangular portion 22. Although it is not shown in the drawings, the screw holes 228 are provided so as to extend in the longitudinal direction of the outer post 18.

As shown in FIG. 3, the projecting part 23 of the outer portion 20 includes a pair of projecting pieces 231 parallel to each other with a certain interval. In the projecting parts 23, the base ends of the pair of projecting pieces 231 are connected to each center part (center part in the front-and-rear direction) of the first and second side surface parts 223 and 224 in the rectangular portion 22.

As shown in FIG. 3, the arc portion 24 of the outer portion 20 includes an arc piece 241 having an approximately arc shape, and a string piece 242 connecting both ends (both ends in the front-and-rear direction) of the arc piece 241. The tips of the pair of projecting pieces 231 in the projecting part 23 are connected to each center part (center part in the front-and-rear direction) of the string pieces 242 of the arc portions 24.

According to the above configuration, as shown in FIGS. 2 and 3, a total of four metal fitting attachment grooves 25 used to attach the attachment metal fittings 21 are formed on both sides (both sides in the left-and-right direction) of the outer portion 20. In more detail, the first side surface part 223 of the rectangular portion 22, the projecting pieces 231 of the projecting part 23, and the string piece 242 of the arc portion 24 are connected together, and thereby two metal fitting attachment grooves 25 are formed. In addition, the second side surface part 224 of the rectangular portion 22, the projecting pieces 231 of the projecting part 23, and the string piece 242 of the arc portion 24 are connected together, and thereby two metal fitting attachment grooves 25 are formed.

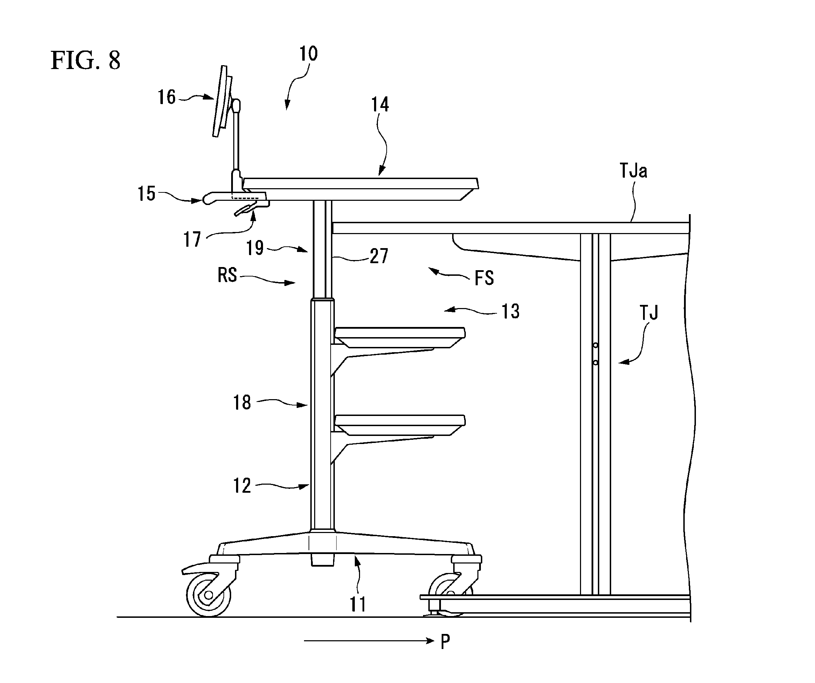

As shown in FIG. 8, one end in the longitudinal direction of the outer portion 20 is fixed to the center part (connection part of the legs 111) of the base portion 11 so that the front and rear surface parts 221 and 222 of the rectangular portion 22 shown in FIG. 3 face the front and rear sides of the cart device 10 respectively. Screws (not shown) screwed from the base portion 11 are screwed into the screw holes 228 shown in FIG. 3, and thus the outer portion 20 can be fixed to the base portion 11.

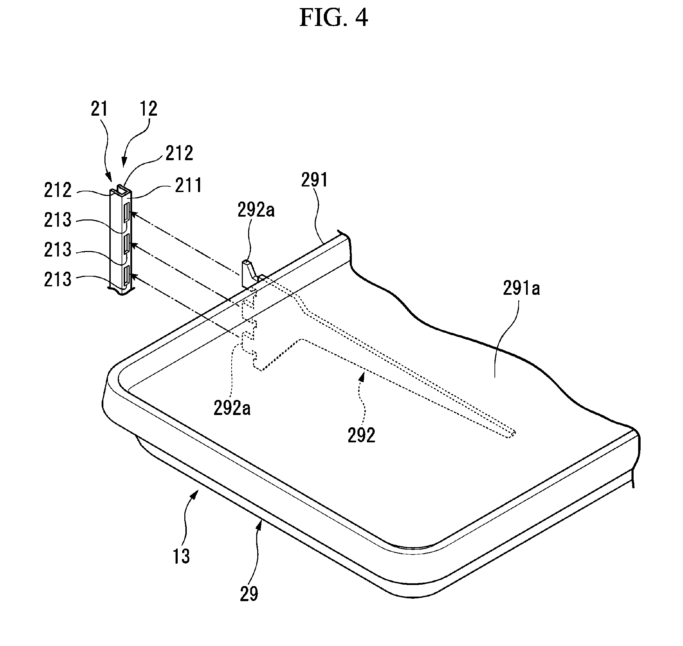

The attachment metal fitting 21 shown in FIG. 2 is a member used to attach the storage member 13 to the support base body 12. FIG. 4 is a schematic perspective view showing an attachment structure of the storage member 13 to the support base body 12. The attachment metal fitting 21 is an elongated member composed of metal and is formed into an approximately U-shape in cross-section in a direction perpendicular to the longitudinal direction thereof. The attachment metal fitting 21 includes a base piece 211 having an elongated strip shape, and a pair of side pieces 212 which are connected to both edges of the base piece 211 at approximately 90° with respect to the base piece 211 and which are parallel to each other.

The separation distance between the pair of side pieces 212 is set to be approximately equal to the groove width of the metal fitting attachment groove 25 of the outer portion 20 shown in FIG. 3. As shown in FIG. 4, the base piece 211 is provided with three claw engagement holes 213 (engagement holes, second attachment parts) having an approximately rectangular shape which are disposed in series with certain intervals in the longitudinal direction thereof. The claw engagement hole 213 is configured to allow an engagement claw 292a (described below) to be attached thereto. In addition, the claw engagement holes 213 are provided in the outer post 18 at each of both outer sides in the left-and-right direction of the guide rollers 28 or the roller guide grooves 225 which are disposed inside the outer post 18.

As shown in FIG. 2, the attachment metal fitting 21 is fitted into each of four metal fitting attachment grooves 25 formed in the outer portion 20 so that the base piece 211 thereof faces the outside. Accordingly, the claw engagement holes 213 formed in the base piece 211 are exposed to the outside of the outer portion 20. In addition, although it is not shown in the drawings, the attachment metal fittings 21 are fitted into a plurality of positions in the metal fitting attachment groove 25 extending in the longitudinal direction of the outer portion 20.

On the other hand, as shown in FIG. 2, the inner post 19 of the support base body 12 includes an tubular inner portion 26 integrally formed of aluminum or the like, a bumper member 27 attached to the inner portion 26, and the guide rollers 28 rotatably supported by the inner portion 26.

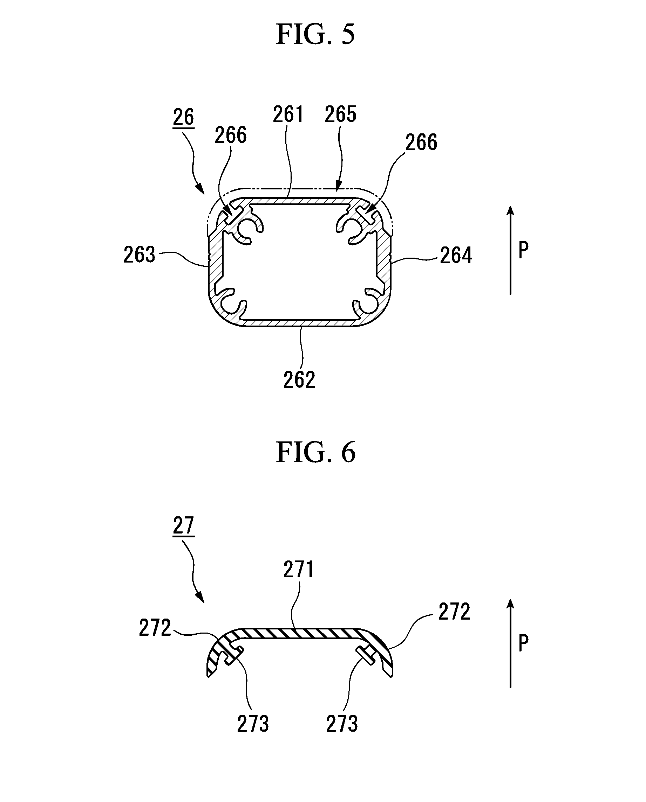

FIG. 5 is a schematic cross-sectional view showing the inner portion 26 in the horizontal direction. The inner portion 26 has an approximately rectangular shape in cross-section. The inner portion 26 includes a front surface wall 261, a rear surface wall 262, a first side surface wall 263, and a second side surface wall 264. The front and rear surface walls 261 and 262 extend to be parallel to each other to face each other. The first and second side surface walls 263 and 264 extend to be appropriately perpendicular to the front and rear surface walls 261 and 262 so as to face each other.

The inner portion 26 is formed into a size capable of being inserted into the inner cavity K of the outer portion 20. That is, the separation distance between the front and rear surface walls 261 and 262 are formed to be smaller than the separation distance between the front and rear surface parts 221 and 222. In addition, the separation distance between the first and second side surface walls 263 and 264 are formed to be smaller than the separation distance between the first and second side surface parts 223 and 224.

As shown in FIG. 5, by cutting out a portion from the outer lateral surface of the inner portion 26, a cutout portion 265 is formed. The cutout portion 265 is disposed so as to reach from the first side surface wall 263 via the front surface wall 261 to the second side surface wall 264. The cutout portion 265 is formed so that the cross-sectional shape thereof appropriately corresponds to the cross-sectional shape of the bumper member 27 (the bumper member 27 is shown by two-dot chain line in FIG. 5).

In addition, a pair of engagement recesses 266 having an upside-down T-shape in cross-section are formed in the outer lateral surface of the inner portion 26 facing the cutout portion 265. That is, the width of the engagement recess 266 is drastically wider as it approaches from the outer lateral surface toward the inside of the inner portion 26.

### (Bumper Member)

The bumper member 27 shown in FIG. 2 is a member to absorb impact applied to the inner post 19. FIG. 6 is a schematic cross-sectional view showing the bumper member 27 in the horizontal direction. The bumper member 27 is an elongated member which is formed of an elastic member such as rubber and extends in the up-and-down direction. The bumper member 27 includes a linear part 271 extending to be linear in cross-section, and a pair of arc parts 272 extending from both ends (both ends in the left-and-right direction) of the linear part 271 so as to be arc-shape in cross-section. Each of the pair of arc parts 272 is provided with an engagement projection 273 projecting from the inner lateral surface thereof. Each engagement projection 273 is formed having a cross-sectional shape approximately corresponding to the engagement recess 266 formed in the inner portion 26, that is, having an upside-down T-shape in cross-section. In addition, the length in the up-and-down direction of the bumper member 27 is formed to be greater than or equal to the relative movable distance of the inner post 19 with respect to the outer post 18.

As shown in FIG. 2, the bumper member 27 is attached to the cutout portion 265 formed in the inner portion 26 so that the engagement projections 273 thereof face the inner portion 26. That is, the bumper member 27 is provided on the front side of the outer lateral surface of the inner portion 26. At this time, the linear part 271 of the bumper member 27 closely contacts the front surface wall 261 of the inner portion 26, and the pair of engagement projections 273 of the bumper member 27 are engaged with the pair of engagement recesses 266 formed in the inner portion 26. Accordingly, the bumper member 27 is prevented from being detached from the inner portion 26.

As described above, the cutout portion 265 of the inner portion 26 is formed so that the cross-sectional shape thereof corresponds to that of the bumper member 27. Accordingly, when the bumper member 27 is attached to the cutout portion 265 of the inner portion 26, the outer lateral surfaces of the pair of arc parts 272 in the bumper member 27 became approximately flush with the outer lateral surfaces of the first and second side surface walls 263 and 264 in the inner portion 26.

### (Guide Roller)

The guide rollers 28 shown in FIG. 2 guide slide movement of the inner post 19 with respect to the outer post 18. The guide rollers 28 are provided on both sides in the left-and-right direction of the outer lateral surface of the inner post 19. Each guide roller 28 includes a roller body 281 formed of resin or the like, and a support shaft 282 rotatably supporting the roller body 281. The support shaft 282 is fixed to each of the first and second side surface walls 263 and 264 of the inner portion 26, so as to extend in the left-and-right direction. The roller body 281 is supported by each of both side parts (both side parts in the left-and-right direction) of the inner post 19 so as to be capable of rotating around the support shaft 282. In addition, although it is not described in FIG. 2 in detail, a plurality of guide rollers 28 are provided in the inner post 19 with certain intervals in the longitudinal direction.

As shown in FIG. 2, the inner portion 26 of the inner post 19 is inserted into the inner cavity K of the outer portion 20 in the outer post 18 so that one guide roller 28 is fitted into the first roller guide groove 225A formed in the outer portion 20 and so that the other guide roller 28 is fitted into the second roller guide groove 225B formed in the outer portion 20 in the same way. As described above, the separation distance between the front and rear surface walls 261 and 262 of the inner portion 26 is set to be smaller than the separation distance between the front and rear surface parts 221 and 222 of the outer portion 20. Therefore, in a state where the inner portion 26 is inserted into the inner cavity K of the outer portion 20, a certain gap C is formed between the inner and outer portions 26 and 20. Thus, the inner post 19 is configured to be slidable inside the outer post 18 in its longitudinal direction (up-and-down direction), and it is possible to adjust the relative position of the inner post 19 with respect to the outer post 18 in the up-and-down direction. In addition, not described in the drawings, a lock mechanism is provided inside the outer post 18, wherein the lock mechanism is used to stop a slide of the inner post 19, to lock the inner post 19 at an optional position.

As described above, each of the pair of roller-fitting pieces 227 in the second roller guide groove 225B is formed into an arc shape in cross-section which corresponds to the peripheral surface of the guide roller 28. Accordingly, one guide roller 28 is fitted into the second roller guide groove 225B, and thus the position of the inner post 19 is determined inside the outer post 18.

On the other hand, each of the pair of roller-holding pieces 226 in the first roller guide groove 225A is formed into a flat plate shape. Accordingly, even if some errors occur in the separation distance between the pair of guide rollers 28 due to design errors, assembly errors or the like in parts of the guide rollers 28 or the like, the roller-holding pieces 226 can reliably hold the other guide roller 28. That is, even if the arrangement position of the other guide roller 28 is changed in the left-and-right direction, the first roller guide groove 225A can stably hold the guide roller 28.

### (Storage Member)

The storage members 13 shown in FIG. 1 are members to store various articles used for work. As shown in FIG. 1, the storage members 13 include shelf boards 29 (storage member) attached to the front side of the support base body 12, and a storage pocket 30 (storage member) attached to the rear side of the support base body 12. In addition, the storage member 13 is an optional structure, and it is possible to not provide a storage member 13 in the cart device 10. Furthermore, the storage member 13 may be provided on at least one of the front and rear sides of the support base body 12.

The shelf boards 29 shown in FIG. 1 are employed to store an article in which the frequency in use is relatively low. As shown in FIG. 4, the shelf board 29 includes a shelf board body 291 in which an article-placing surface 291a is formed on the top thereof, and shelf board attachment metal fittings 292 provided on the lower surface of the shelf board body 291, wherein the shelf board attachment metal fitting 292 is provided with three engagement claws 292a (first attachment part). The intervals between the three engagement claws 292a formed in the shelf board attachment metal fitting 292 correspond to the intervals between the three claw engagement holes 213 formed in the attachment metal fitting 21 of the outer post 18. In addition, not shown in the drawings, the shelf board attachment metal fitting 292 is provided on the lower surface of the shelf board body 291 at each of two positions with a certain interval in the left-and-right direction. The distance between the two shelf board attachment metal fittings 292 corresponds to the distance between the pair of attachment metal fittings 21 in the outer post 18.

As shown in FIG. 4, the three engagement claws 292a of the shelf board attachment metal fitting 292 are engaged with edges of the three claw engagement holes 213 of the attachment mental fitting 21, and thus the shelf board body 291 is attached to the front side of the support base body 12. In this embodiment, the shelf board body 291 is attached to each of two positions separated from each other in the up-and-down direction of the support base body 12. In addition, the number of shelf board bodies 291 is not limited to that of this embodiment, and may be changed into an optional number.

The storage pocket 30 shown in FIG. 1 is employed to store an article in which the frequency in use is relatively high.

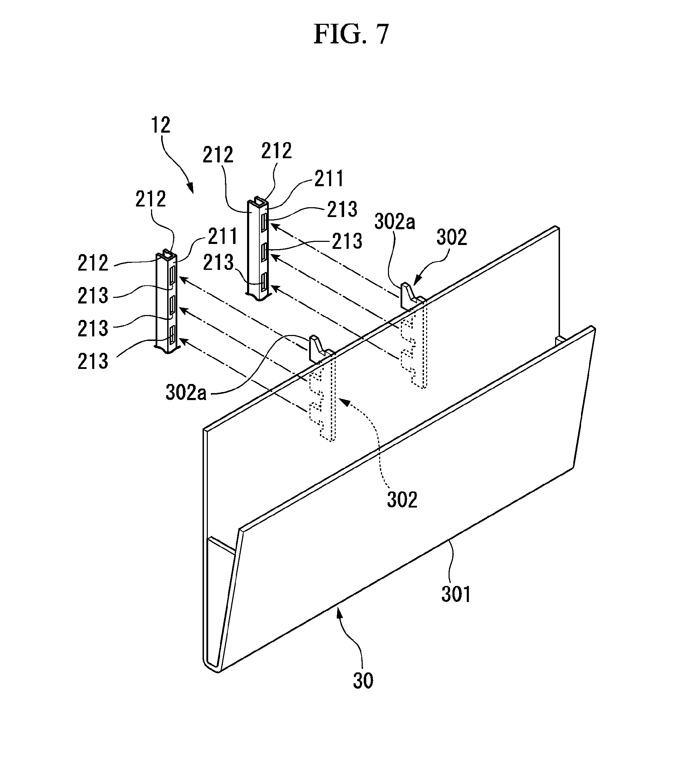

FIG. 7 is a schematic perspective view showing an attachment structure of the storage pocket 30 to the support base body 12. As shown in FIG. 7, the storage pocket 30 includes a pocket body 301 which is a casing having an opening at the upper part thereof, and a pair of storage pocket attachment metal fittings 302 provided on the back side (near the front side of the cart device) of the pocket body 301, wherein the storage pocket attachment metal fitting 302 is provided with three engagement claws 302a (first attachment part). Similar to the above-described shelf board body 291, the intervals between the three engagement claws 302a formed in the storage pocket attachment metal fitting 302 correspond to the intervals between the three claw engagement holes 213 formed in the attachment metal fitting 21 of the outer post 18. In addition, the distance between the pair of storage pocket attachment metal fittings 302 corresponds to the distance between the pair of attachment metal fittings 21.

As shown in FIG. 7, the three engagement claws 302a of the storage pocket attachment metal fitting 302 are engaged with edges of the three claw engagement holes 213 of the attachment mental fitting 21 in the outer post 18, and thus the storage pocket 30 is attached to the rear side of the support base body 12. In addition, the number of storage pockets 30 is not limited to that of this embodiment, and may be changed into an optional number.

### (Top Board)

The top board 14 shown in FIG. 1 is a flat board member in which an article-placing surface 14a is formed on the top surface thereof. The top of the inner post 19 is fixed to the center position of the lower surface of the top board 14, and thus a portion in plan view of the top board 14 is supported by the support base body 12 (the inner post 19) from below.

Accordingly, as shown in FIG. 1, a front space FS is formed in the front side of the support base body 12 below the top board 14. The front space FS opens over the left side, the front side, and the right side of the cart device 10. In addition, a rear space RS is formed in the rear side of the support base body 12 below the top board 14. The rear space RS opens over the right side, the rear side, and the left side of the cart device 10.

### (Operating Handle)

As shown in FIG. 1, the operating handle 15 includes a pair of attachment bars 151 projecting rearward from the rear end of the lower surface of the top board 14, and an operating bar 152 which connects the tips on the rear side of the pair of attachment bars 151 to each other and which extends in the left-and-right direction. A worker holds and operates the operating bar 152, and thereby can allow the cart device 10 to travel in a certain direction.

### (Electronic Device Unit)

The electronic device unit 16 shown in FIG. 1 includes a hinge 161 fixed to the rear end of the top board 14, a support rod 162 supported by the hinge 161 so as to be rotatable around a horizontal axis and around a vertical axis, a holder 163 supported by the tip of the support rod 162 so as to be rotatable around an horizontal axis, and a tablet PC 164 held by the holder 163.

According to the electronic device unit 16, when using the tablet PC 164, a worker rotates the holder 163 so as to set the display surface 164a of the tablet PC 164 to be approximately parallel to the support rod 162, rotates the support rod 162 around a horizontal axis so as to vertically erect the support rod 162, also rotates the support rod 162 around a vertical axis, and thereby can let the display surface 164a of the tablet PC 164 face the worker. In this way, compared to a case where the tablet PC 164 is directly placed on the article-placing surface 14a of the top board 14, by disposing the tablet PC 164 at a separated position above the top board 14, an area occupied by the tablet PC 164 is reduced, and thus an advantage of being able to widely use the article-placing surface 14a of the top board 14 is obtained.

On the other hand, when not using the tablet PC 164, a worker rotates the support rod 162 around a horizontal axis into a state where the support rod 162 is approximately horizontally laid, and thereby it is possible to fold the electronic device unit 16 and to compactly store the electronic device unit 16 on the top board 14. In addition, when not using the tablet PC 164, the tablet PC 164 may be removed from the holder 163.

### (Operating Lever)

The operating lever 17 shown in FIG. 1 is a member to operate the lock mechanism (not shown) which locks slide movement in the up-and-down direction of the inner post 19. As described above, the lock mechanism is provided inside the outer post 18, wherein the lock mechanism stops a slide of the inner post 19 provided to be slidable, to lock the inner post 19 in an optional position. A worker operates the operating lever 17, and thus it is possible to switch locking or unlocking of the inner post 19 through the lock mechanism.

### (Use Situations, Operations and Effects)

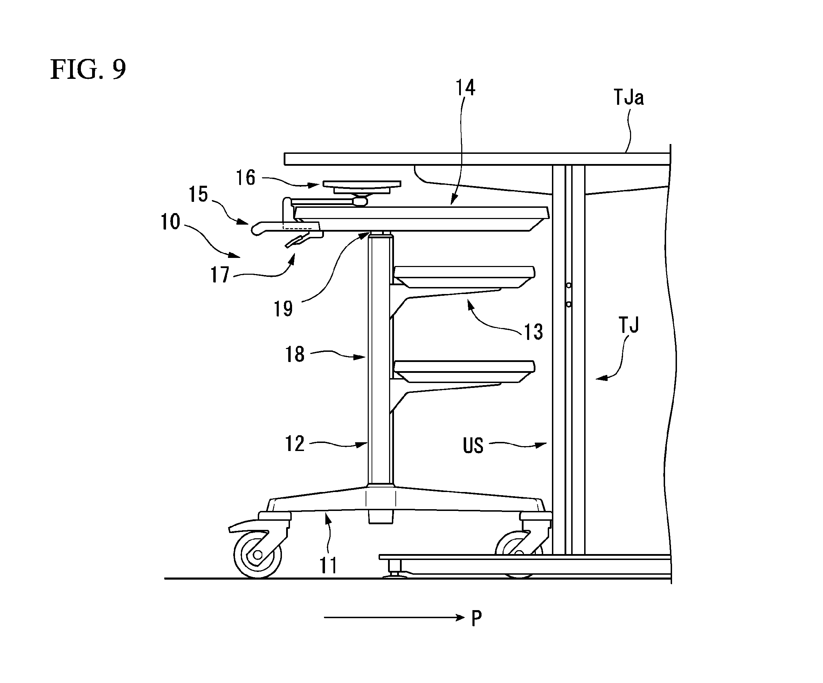

Next, use situations, operations and effects of the cart device 10 related to the first embodiment of the present invention are described below. FIGS. 8 and 9 are views showing use situations of the cart device 10 related to the first embodiment. FIG. 8 shows a state in normal use, and FIG. 9 shows a stored state in non-use.

As shown in FIG. 8, the cart device 10 in normal use is in a state where the inner post 19 is pulled out from the outer post 18 by a certain length, and the level of the top board 14 is higher than a top board TJa of a table TJ installed in an office. When performing operations of moving an article (not shown) between the top board 14 of the cart device 10 and the top board TJa of the table TJ, a worker integrates the cart device 10 with the table TJ.

Specifically, as shown in FIG. 8, the worker lets the cart device 10 travel forward, so that the cart device 10 approaches the table TJ. The top board TJa of the table TJ is inserted into the front space FS formed below the top board 14 of the cart device 10, and the cart device 10 is let to approach the table TJ up to the position in which the inserted top board TJa of the table TJ contacts the support base body 12 of the cart device 10. Accordingly, the cart device 10 is arranged so that the top board 14 of the cart device 10 overlaps with the top board TJa of the table TJ in plan view, and thus a decrease in the space around the table TJ caused by the arrangement of the cart device 10 can be minimized.

As described above, the bumper member 27 formed of an elastic member is provided on the front side of the inner post 19 composing the support base body 12 of the cart device 10. Accordingly, the impact occurring when the top board TJa of the table TJ contacts the inner post 19 is absorbed by the bumper member 27 being elastically deformed. Thus, breakage in the support base body 12 of the cart device 10 or in the top board TJa of the table TJ due to the impact of contact can be prevented.

As described above, the length in the up-and-down direction of the bumper member 27 is formed to be greater than or equal to the distance in which the inner post 19 can move relative to the outer post 18. Accordingly, without reference to a relative movement distance of the inner post 19 with respect to the outer post 18, the top board TJa of the table TJ appropriately contacts the bumper member 27. Thus, impact due to contact between the top board TJa of the table TJ and the inner post 19 is reliably absorbed by the bumper member 27.

On the other hand, as shown in FIG. 9, the cart device 10 in non-use is in a state where most of the inner post 19 is inserted into the inside of the outer post 18, and the level of the top board 14 thereof is lower than the level of the top board TJa of the table TJ. When storing the cart device 10 like this under the top board TJa of the table TJ, first, a worker rotates the support rod 162 of the electronic device unit 16 so as to horizontally lay it, and folds the electronic device unit 16. In this state, the cart device 10 is let to approach the table TJ. Then, since the position of the top board 14 is lower than the position of the top board TJa of the table TJ as described above, it is possible to store the entire cart device 10 in an under space US formed under the top board TJa of the table TJ.

According to the cart device 10 related to the first embodiment of the present invention, in order to guide slide movement of the inner post 19 with respect to the outer post 18, the guide rollers 28 of the inner post 19 or the roller guide grooves 225 of the outer post 18 are provided on both sides in the left-and-right direction of the support base body 12. Thus, the thickness in the front-and-rear direction of the support base body 12 can be thinned compared to the thickness in the left-and-right direction thereof. Accordingly, even if the storage member 13 attached to the front side or the rear side of the support base body 12 is formed into a size not projecting from the top board 14 to the outside in plan view, since the support base body 12 is formed to be thin in the front-and-rear direction, the storage member 13 can be formed widely in the front-and-rear direction. Therefore, it is possible to secure a large storing volume of the storage member 13.

According to the cart device 10 related to the first embodiment of the present invention, as described above, the cutout portion 265 of the inner portion 26 in the inner post 19 is formed so that the cross-sectional shape thereof corresponds to the cross-sectional shape of the bumper member 27. Thus, when the bumper member 27 is attached to the cutout portion 265 of the inner portion 26, the outer lateral surface of the bumper member 27 becomes approximately flush with the outer lateral surface of the inner portion 26. Accordingly, inhibition of smooth slide of the inner post 19 caused by the bumper member 27 contacting the outer portion 20 of the outer post 18 can be prevented.

Furthermore, the pair of guide rollers 28 guide slide of the inner post 19, and thus an interval between the inner portion 26 and the outer portion 20 is held to be constant. Accordingly, inhibition of smooth slide of the inner post 19 caused by the bumper member 27 contacting the outer portion 20, the bumper member 27 being attached to the inner portion 26 and being formed of rubber or the like, can be prevented.

### (Modification)

In this embodiment, the bumper member 27 is formed of an elastic member and is configured to absorb impact by the elastic deformation of the bumper member 27. However, the present invention is not limited to this, and a bumper member may include a spring or the like and may be configured to absorb impact by the elastic deformation thereof.

In this embodiment, a fixed post fixed to the base portion 11 is the outer post 18 having a large diameter, a movable post which moves relative to the fixed post is the inner post 19 having a small diameter, and the movable post is configured to slide in the up-and-down direction in a state where the movable post is fitted into the inner cavity K of the fixed post.

However, contrary to this, the fixed post may be an inner post (second post) having a small diameter, the movable post may be an outer post (first post) having a large diameter, and the movable post may be configured to slide in the up-and-down direction in a state where the movable post is fitted on the outer side of the fixed post.

In this embodiment, the guide rollers 28 are rotatably supported by the outer lateral surface of the inner post 19, and the roller guide grooves 225 are provided on the inner lateral surface of the outer post 18.

However, contrary to this, roller guide grooves may be provided on the outer lateral surface of an inner post, and guide rollers may be rotatably supported by the inner lateral surface of an outer post. In addition, the inner post is one of a fixed post and a movable post, and the outer post is the other of the fixed post and the movable post.

In this embodiment, a first attachment part included in the storage member 13 is configured to be the engagement claw 302a, and a second attachment part included in a fixed post is configured to be the engagement hole. However, contrary to this, a first attachment part included in a storage member may be configured to be an engagement hole, and a second attachment part included in a fixed post may be configured to be an engagement claw.

### (Second Embodiment)

Next, the configuration of a cart device related to a second embodiment of the present invention is described below. Compared to the cart device related to the first embodiment, the cart device related to the second embodiment differs only in an attachment structure of a storage member 13 to a support base body 12. The same reference signs are given to the constituent elements the same as that in the first embodiment, and descriptions thereof are omitted here.

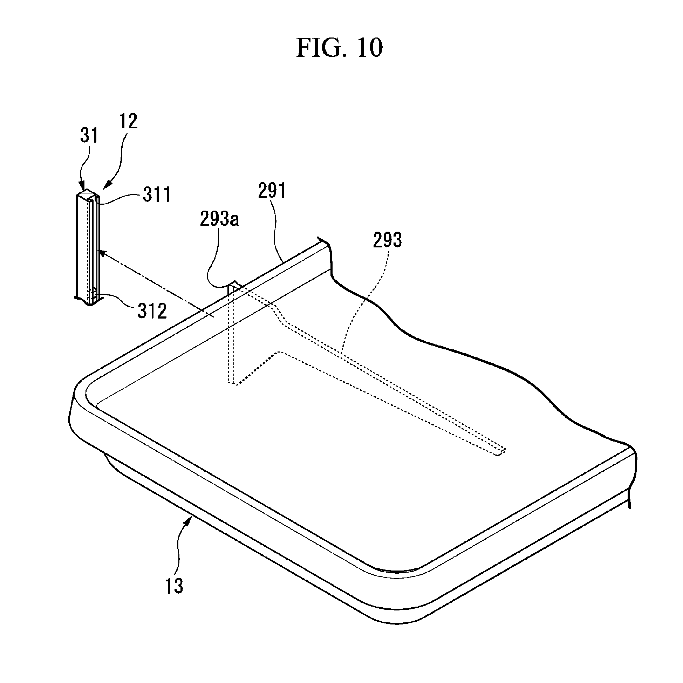

FIG. 10 is a schematic perspective view showing the attachment structure of the storage member 13 to the support base body 12. In the support base body 12 of the second embodiment, an attachment metal fitting 31 is attached into each of the four metal fitting attachment grooves 25 formed in the outer portion 20 of the outer post 18. As shown in FIG. 10, the attachment metal fitting 31 is provided with a fitting groove 311 (second attachment part) extending in the longitudinal direction thereof. The fitting groove 311 is formed so as to have an approximate trapezoid in cross-section in which the groove width thereof is gradually widened with approach from the opening to the bottom of the fitting groove 311. In addition, a stopper 312 used to position the storage member 13 at a certain position in the longitudinal direction of the fitting groove 311 is provided inside the fitting groove 311.

The storage member 13 shown in FIG. 10 includes shelf board attachment metal fittings 293 which are provided on the lower surface of the shelf board body 291 and which have fitting projections 293a (first attachment part). The fitting projection 293a is formed so as to have a shape to be fitted into the fitting groove 311 of the attachment metal fitting 31 of the support base body 12, that is, an approximate trapezoid in cross-section in which the width thereof is gradually widened with approach from the base end to the tip thereof. In other words, the fitting projection 293a has a cross-sectional shape corresponding to that of the fitting groove 311.

As shown in FIG. 10, the fitting projection 293a of the shelf board attachment metal fitting 293 is fitted into the fitting groove 311 of the attachment metal fitting 31 from above, and thus the storage member 13 is attached to the support base body 12. The fitting projection 293a contacts the stopper 312, and thus the position of the storage member 13 is determined with respect to the support base body 12.

The fitting groove 311 has a cross-sectional shape in which the groove width is gradually narrowed with approach from the bottom to the opening thereof. Therefore, the fitting projection 293a fitted into the fitting groove 311 can be prevented from being detached from the fitting groove 311, and the storage member 13 can be reliably attached to the support base body 12.

If the cross-sectional shapes of the fitting groove 311 and the fitting projection 293a correspond to each other, it is not limited to this embodiment, and the design thereof may be appropriately changed. In addition, in this embodiment, the fitting projection 293a and the fitting groove 311 are provided in the storage member 13 and the support base body 12 respectively, but contrary to this, a fitting groove (first attachment part) and a fitting projection (second attachment part) may be provided in the storage member 13 and the support base body 12 respectively.

Hereinbefore, the cart devices in the embodiments of the present invention are described, but the present invention is not limited to the above embodiments and is limited only to the scope of the attached claims. A shape or a combination of each component, an operation procedure or the like shown in the above embodiments is an example, and various modifications based on design requests or the like can be adopted within a scope not departing from the gist of the present invention.

### Description of Reference Signs

- 10: cart device
- 11: base portion
- 111: leg
- 112: caster
- 12: support base body
- 13: storage member
- 14: top board
- 14a: article-placing surface
- 15: operating handle
- 151: attachment bar
- 152: operating bar
- 16: electronic device unit
- 161: hinge
- 162: support rod
- 163: holder
- 164: tablet PC
- 164a: display surface
- 17: operating lever
- 18: outer post (fixed post, first post)
- 19: inner post (movable post, second post)
- 20: outer portion
- 21: attachment metal fitting
- 211: base piece
- 212: side piece
- 213: claw engagement hole (engagement hole, second attachment part)
- 22: rectangular portion
- 221: front surface part
- 222: rear surface part
- 223: first side surface part
- 224: second side surface part
- 225: roller guide groove
- 225A: first roller guide groove
- 225B: second roller guide groove
- 226: roller-holding piece
- 227: roller-fitting piece
- 228: screw hole
- 23: projecting part
- 231: projecting piece
- 24: arc portion
- 241: arc piece
- 242: string piece
- 25: metal fitting attachment groove
- 26: inner portion
- 261: front surface wall
- 262: rear surface wall
- 263: first side surface wall
- 264: second side surface wall
- 265: cutout portion
- 266: engagement recess
- 27: bumper member
- 271: linear part
- 272: arc part
- 273: engagement projection
- 28: guide roller
- 281: roller body
- 282: support shaft
- 29: shelf board (storage member)
- 291: shelf board body
- 291a: article-placing surface
- 292: shelf board attachment metal fitting
- 292a: engagement claw (first attachment part)
- 293: shelf board attachment metal fitting
- 293a: engagement projection (first attachment part)
- 30: storage pocket (storage member)
- 301: pocket body
- 302: storage pocket attachment metal fitting
- 302a: engagement claw (first attachment part)
- 31: attachment metal fitting
- 311: fitting groove (second attachment part)
- 312: stopper
- C: gap
- FS: front space
- K: inner cavity
- P: arrow
- RS: rear space
- TJ: table
- TJa: top board
- US: under space

## Claims

1. A cart device comprising:
a base portion capable of traveling on a floor;
a support base body provided on the base portion so as to project upward; and
a top board supported by the support base body from below,
wherein the support base body includes:
a fixed post fixed to the base portion so as to extend upward;
a movable post provided in the fixed post so as to be capable of moving in an up-and-down direction relative to the fixed post, the movable post supporting the top board from below; and
a bumper member provided on an outer lateral surface of the movable post so as to be capable of absorbing impact.

2. The cart device according to Claim 1,
wherein a length of the bumper member in the up-and-down direction is greater than or equal to a distance in which the movable post can move relative to the fixed post.

3. The cart device according to Claim 1,
wherein the fixed post is formed into a tubular shape, and
wherein the movable post is fitted into an inner cavity of the fixed post so as to be slidable in the up-and-down direction.

4. The cart device according to Claim 1,
wherein the bumper member is provided on at least a front side of the outer lateral surface of the movable post.

5. The cart device according to Claim 1,
wherein the bumper member is formed of an elastic member.

6. The cart device according to Claim 1,
wherein a cutout portion having a shape corresponding to the bumper member is formed in the outer lateral surface of the movable post, and
wherein the bumper member is attached to the cutout portion.

7. The cart device according to Claim 1, further comprising
a storage member provided in at least one of a front side and a rear side of an outer lateral surface of the fixed post, the storage member being used for storing an article,
wherein one of the fixed post and the movable post is formed as a first post being hollow,
wherein the other of the fixed post and the movable post is formed as a second post capable of being inserted into an inner cavity of the first post,
wherein one group of guide rollers and roller guide grooves are provided on both sides in a left-and-right direction of an inner lateral surface of the first post, the roller guide grooves being used to guide the guide rollers in the up-and-down direction, and
wherein the other group of the guide rollers and the roller guide grooves are provided on both sides in the left-and-right direction of an outer lateral surface of the second post.

8. The cart device according to Claim 7,
wherein the fixed post is formed to be hollow,
wherein the movable post is formed so as to be capable of being inserted into an inner cavity of the fixed post, and
wherein a second attachment part allowing a first attachment part included in the storage member to be attached thereto is provided in the fixed post at each of both outer sides in the left-and-right direction of the guide rollers or the roller guide grooves which are disposed inside the fixed post.

9. The cart device according to Claim 8,
wherein the first attachment part is one of an engagement claw and an engagement hole allowing the engagement claw to engage therewith, and
wherein the second attachment part is the other of the engagement claw and the engagement hole.

10. The cart device according to Claim 8,
wherein the first attachment part is one of a fitting groove and a fitting projection having a cross-sectional shape corresponding to that of the fitting groove,
wherein the second attachment part is the other of the fitting groove and the fitting projection, and
wherein the fitting groove has a cross-sectional shape in a horizontal direction in which a groove width thereof is formed so as to gradually widen as it approaches from an opening to a bottom of the fitting groove.
